# EUROPÄISCHE PATENTSCHRIFT

(11) **EP 1 810 388 B1**
(45) Veröffentlichungstag und Bekanntmachung des Hinweises auf die Patenterteilung: **23.04.2014**
(21) Anmeldenummer: 05776463.1
(22) Anmeldetag: 02.09.2005
(51) Int. Cl.: H02K 3/52

(54) **ELEKTROMOTOR**
ELECTRIC MOTOR
MOTEUR ELECTRIQUE

(30) Priorität: 10.11.2004 DE 202004017721 U
(43) Veröffentlichungstag der Anmeldung: 25.07.2007
(73) Patentinhaber: ebm-papst St. Georgen GmbH & Co. KG, 78112 St. Georgen (DE)
(72) Erfinder: KIENZLER, Roland, 78098 Triberg-Nussbach (DE); ALTINDIS, Ismail, 78120 Furtwangen (DE); WEISSER, Reimund, 78126 Königsfeld-Erdmannsweiler (DE); MAIER, Jürgen, 72175 Dornhan (DE)
(74) Vertreter: Raible, Tobias
(86) Internationale Anmeldenummer: PCT/EP2005/009442
(87) Internationale Veröffentlichungsnummer: WO 2006/050765

(56) Entgegenhaltungen:
- WO-A-2004/062066
- DE-A1- 19 740 938
- DE-U1- 20 300 478
- US-A- 4 182 026
- US-A1- 2004 007 935
- PATENT ABSTRACTS OF JAPAN Bd. 2002, Nr. 09, 4. September 2002 (2002-09-04) -& JP 2002 153003 A (NIPPON DENSAN CORP), 24. Mai 2002 (2002-05-24)

## Beschreibung

Die Erfindung betrifft einen Elektromotor mit einem Stator, der eine Wicklungsanordnung trägt, welche zur Erzeugung eines Drehfelds ausgebildet ist.

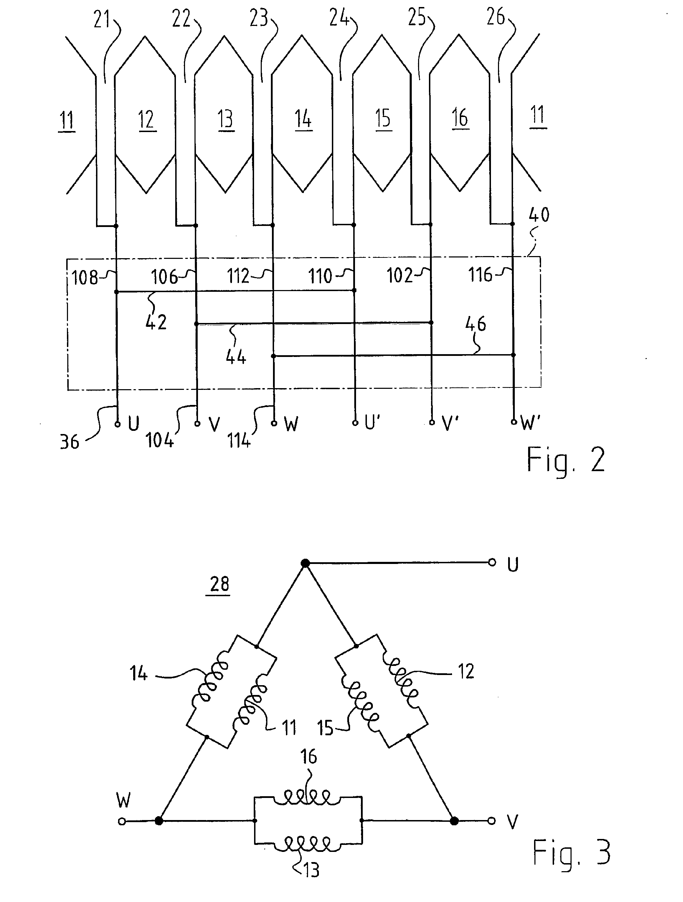

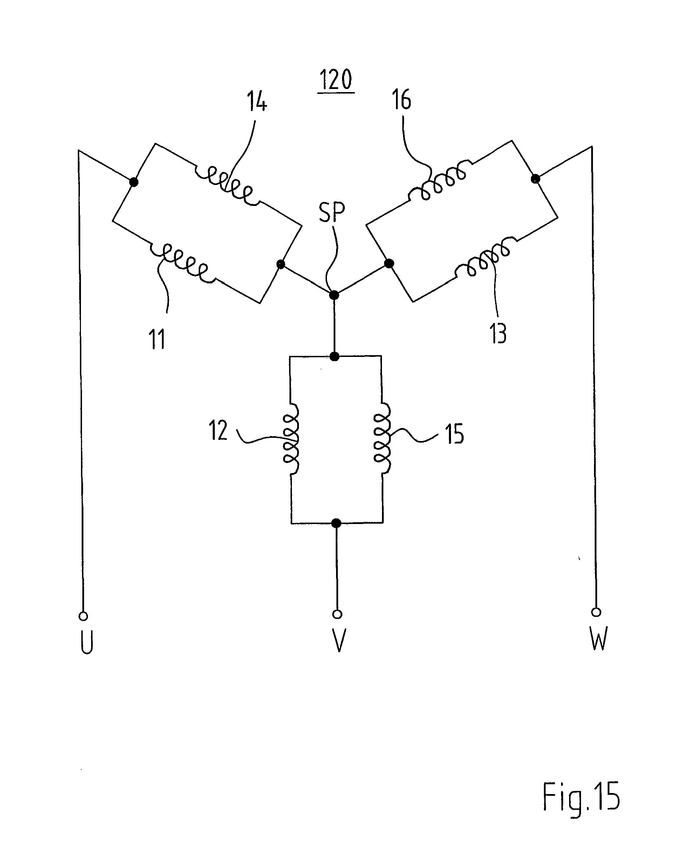

Ein Dreiphasenmotor (Drehstrommotor) kann in Sternschaltung (Y-Schaltung) und in Dreieckschaltung betrieben werden. Wenn bei einer Sternschaltung die Einzelwicklungen jeder Phase in Serie geschaltet sind, bezeichnet man das als Stern-Reihe-Schaltung, und wenn zwei Einzelwicklungen pro Phase parallel geschaltet werden, bezeichnet man das als Stern-Doppelparallel-Schaltung, vgl. Fig. 15. Werden vier Einzelwicklungen parallel geschaltet, so bezeichnet man das als Stern-Vierfachparallel-Schaltung. Analog spricht man von einer Dreieck-Reihen-Schaltung und einer Dreieck-Doppelparallel-Schaltung (vgl. Fig. 3) oder einer Dreleck-Vierfachparallel-Schaltung.

Zur Herstellung solcher unterschiedlicher Schaltungen müssen die Wicklungsende der Einzelspulen in verschiedener Weise miteinander verbunden werden, was viel Handarbeit erfordert. Z. B. werden beim Motor nach der US 6177 741 B1, dessen Stator mit einer Sternschaltung versehen ist, die Enden der lackierten Kupferdrähte durch Löt- oder Crimpverbindungen mit den Enden von flachen Leiterbahnen verbunden, die auf einer isolierenden Platte befestigt sind. Eine dieser Leiterbahnen dient als Sternpunktverbinder, und drei andere Leiterbahnen dienen als Anschlüsse für die Phasen U, V und W. Bei Motoren für niedrige Leistungen ist es auch bekannt, die Enden der Einzelwicklungen durch mehrschichtige Leiterplatten mit gedruckten Schaltungen miteinander zu verbinden, doch eignen sich solche Konstruktionen dort nicht, wo im Betrieb hohe Ströme fließen müssen.

Auch kennt man aus der japanischen Patent-Offenlegungsschrift 2002-153 003 A, veröffentlicht am 24. Mai 2002, einen dreiphasigen Antriebsmotor für die Hydraulikpumpe einer Servolenkung. Dieser Motor hat einen Stator mit einer Dreieck-Dreifachparallelschaltung aus neun ausgeprägten Statorpolen. Ferner hat er eine U-Schiene, eine V-Schiene und eine W-Schiene. An diesen sind jeweils Haken angebracht, in die bei der Herstellung die Verbindungsleitungen zwischen benachbarten Spulen eingehängt werden. Dies vereinfacht das Wickeln, da man immer Gruppen von drei aufeinander folgenden Spulen ohne Unterbrechung des Leitungsdrahtes wickeln kann. Alternativ kann man auch alle neun aufeinander folgenden Spulen ohne Unterbrechung des Leitungsdrahtes wickeln.

Ferner kennt man aus der WO 2004/062 066 A1 einen dreiphasigen elektronisch kommutierten Kleinmotor mit neun Strängen, von denen immer drei parallel geschaltet sind und deren Sternpunkt über einen Sternpunktverbinder verbunden ist. Letzterer ist aus Draht und hat neun Schlaufen oder Ohren, mit denen die entsprechenden Anschlüsse der Spulen bei der Montage verbunden werden. Es handelt sich also um einen Dreiphasenmotor in Sternschaltung mit Dreifach-Parallelschaltung der Stränge.

Die Anschlüsse des Motors sind mit Drähten verbunden, die ihrerseits ebenfalls Ohren / Schlaufen haben, an welche die zugeordneten Spulenanschlüsse angeschlossen sind.

Bei diesem Motor ist jedes der beiden Spulenenden einer Spule mit einem flachen Anschlussstück verbunden, das an einem Isolierring am Stator befestigt ist. Das sind insgesamt 18 Anschlussstücke, und diese werden durch einen sogenannten Verschaltring verschaltet.

Neun der 18 Spulenenden sind mit dem Sternpunktverbinder verbunden und nicht nach außen geführt. Die anderen neun Spulenenden sind mit den Motoranschlüssen verbunden.

Im Verschaltring sind zur Verbindung gebogene Drähte vorgesehen. Gegenüber einer bekannten Lösung mit gestanzten Flachleitern, die hochkant stehen, wird eine Materialersparnis von 80 % angeführt. Der Verschaltring enthält einen zentralen Kunststoffring. Auf diesem befindet sich oben eine Art Deckel, ebenfalls aus Kunststoff, und unten eine Art Bodendeckel, ebenfalls aus Kunststoff. Aus diesem "Bauwerk" ragen die Drähte für den Sternpunkt und für die Anschlüsse U, V, W mit ihren Schlaufen seitlich heraus, und mit diesen Schlaufen werden die neun Spulenenden, die nicht mit diesem Sternpunkt verbunden sind, ihrerseits verbunden.

Die US 4 182 026 zeigt einen Schrittmotor für dreiphasigen Betrieb. Solche Schrittmotoren haben oft viele Stator- und viele Rotorpole.

Deshalb werden hier Spulenkörper aus Kunststoff durch Streifen aus Kunststoff zu einer Kette von Spulenkörpern verbunden, und beim Beispiel verwendet man Ketten mit zwölf Spulenkörpern. Jeder von diesen hat zwei in Kunststoff eingespritzte Leiter, die nach oben ragen und zur Verbindung mit einer Leiterplatte dienen. Dort werden sie an Leiterbahnen festgelötet. Da der Motor zwölf Statorpole hat, von denen jeder zwei Stifte hat, müssen insgesamt 24 Stifte in die entsprechenden Löcher der Leiterplatte eingefädelt werden. Die Drähte der Statorwicklung werden an einer Wickelmaschine aufgewickelt und dann an die Stifte angeschweißt oder angelötet.

Die Streifen aus Kunststoff, welche die Spulenkörper verbinden, dienen auch als Abstandshalter bei der Montage. Zuerst schiebt man einen Polkern ein, um den betreffenden Spulenkörper zu versteifen, bewickelt dann den Spulenkörper, lötet oder schweißt die Wickeldrähte an die Stifte, setzt dann die bewickelten Teile auf einen Haltekern, führt alles in einen magnetischen Rückschluss ein, der entsprechende Nuten hat, verlötet die Stifte mit der Leiterplatte, klebt diese mit Kunstharz in ein Gehäuse ein, zieht dann den Kern heraus, setzt einen Lagerhalter in ein Loch der Leiterplatte, setzt eine Art Welle ein, und gießt den Stator mit Epoxiharz aus. Dann dreht man den zentralen Teil des Stators aus, so dass die Polkerne auf ihrer Luftspaltseite frei liegen und eine entsprechende Rundung erhalten, und montiert dann den Rotor und zwei Lagerschilde. Statt einer Leiterplatte kann man hier ggf. auch Verbindungen aus isolierten Drähten verwenden.

Es ist deshalb eine Aufgabe der Erfindung, einen neuen Elektromotor bereit zu stellen.

Nach der Erfindung wird diese Aufgabe gelöst durch einen Motor gemäß Anspruch 1. Die Verbindung der Wicklungsenden der Einzelwicklungen mit den Befestigungselementen der zugeordneten Verbindungselemente ist in einfacher Weise möglich, z. B. mittels Widerstandsschweißen, wodurch man niedrige Übergangswiderstände erhält. Die Verbindungselemente können ihrerseits durch eine funktionsadäquate Verbindungsanordnung in der gewünschten Weise elektrisch verbunden werden, um z. B. eine Stern-Doppelparallel-Schaltung zu erhalten. Eine solche Verbindungsanordnung hat Leiterbahnen, von denen jede mit bestimmten zugeordneten Verbindungselementen durch Schweißverbindungen verbunden ist, so dass man auch hier niedrige Übergangswiderstände erhält. Die Erfindung ermöglicht so eine hochgradig automatisierte Fertigung von Statoren hoher Qualität, welche bei hohen Umgebungstemperaturen und/oder hohen Stromstärken und/oder einer starken Beanspruchung durch Vibrationen verwendet werden können. Eine bevorzugte Anwendung sind Motoren für niedrige Betriebsspannungen, wie sie aus Sicherheitsgründen im Bergbau verwendet werden müssen, wo solche Motoren durch Vibrationen besonders stark beansprucht werden und gleichzeitig eine hohe Betriebssicherheit verlangt wird.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: eine übliche Darstellung eines Stators mit sechs Nuten, sechs Polen und einer dort vorgesehenen Wicklung, die für eine Dreieck-Doppelparallel-Schaltung bestimmt ist, sowie mit elektrischen Verbindungselementen, über welche die elektrischen Verbindungen zwischen benachbarten Spulen geführt sind,
- Fig. 2: eine Darstellung analog Fig. 1, bei der dargestellt ist, wie eine separate Verbindungsanordnung 40 die Wicklung der Fig. 1 in eine Dreieck-Doppelparallel-Schaltung verwandelt,
- Fig. 3: eine Darstellung einer Dreieck-Doppelparallel-Schaltung,
- Fig. 4: eine Darstellung eines Stators mit sechs Nuten und sechs Zähnen und der hierauf angeordneten Wicklungsanordnung gemäß Fig. 1 bis 3,
- Fig. 5: eine auseinander gezogene Darstellung eines Stators, der gemäß Fig. 2 ausgebildet ist,
- Fig. 6a bis 6e: eine Darstellung eines elektrischen Verbindungselements, wie es bei Fig. 1 und 5 verwendet wird,
- Fig. 7a bis 7e: eine Darstellung eines elektrischen Verbindungselements, wie es bei Fig. 1 und 5 verwendet wird,
- Fig. 8a bis 8e: eine Darstellung eines elektrischen Verbindungselements, wie es bei Fig. 1 bis 5 Verwendung findet,
- Fig. 9: eine Draufsicht auf eine Verbindungsanordnung 40, welche eine Mehrzahl von Leiterbahnen enthält,
- Fig. 10: eine Draufsicht auf den Stator der Fig. 5, gesehen in Richtung des Pfeiles X der Fig. 12,
- Fig. 11: die Darstellung einer Einzelheit XI der Fig. 10,
- Fig. 12: einen Schnitt, gesehen längs der Linie XII-XII der Fig. 10,
- Fig. 13: eine Darstellung analog Fig. 1 und 2, aber für eine Stern-Doppelparallel-Schaltung,
- Fig. 14: die Wicklung der Fig. 13 zusammen mit einer separaten Verbindungsanordnung 140, welche die Wicklungsanordnung der Fig. 13 zu einer Stern-Doppelparallel-Schaltung ergänzt,
- Fig. 15: eine Darstellung einer Stern-Doppelparallel-Schaltung gemäß Fig. 14 in üblicher Darstellungsweise,
- Fig. 16: eine Darstellung eines Statorblechpakets, das mit einer Wicklung gemäß Fig. 13 durchgehend bewickelt ist,
- Fig. 17: die Wicklung der Fig. 16 nach dem Auftrennen der durchgehenden Wicklungsanordnung, wodurch drei separate Wicklungsgruppen entstanden sind,
- Fig. 18: eine perspektivische Darstellung in Explosionsdarstellung,
- Fig. 19: eine Draufsicht, gesehen in Richtung des Pfeiles XIX der Fig. 21,
- Fig. 20: eine vergrößerte Darstellung der Einzelheit XX der Fig. 19, und
- Fig. 21: einen Schnitt, gesehen längs der Linie XXI-XXI der Fig. 19.

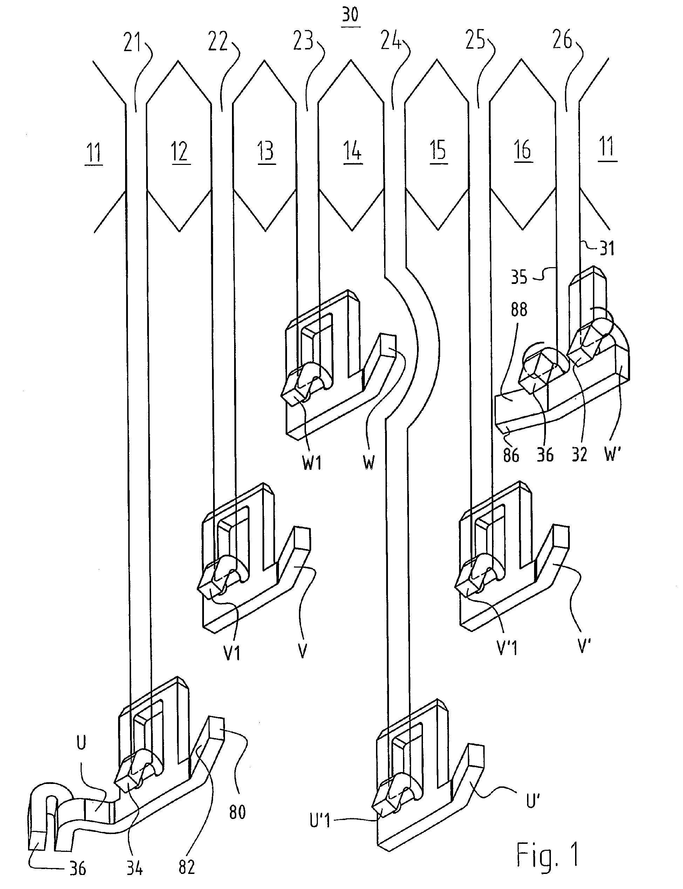

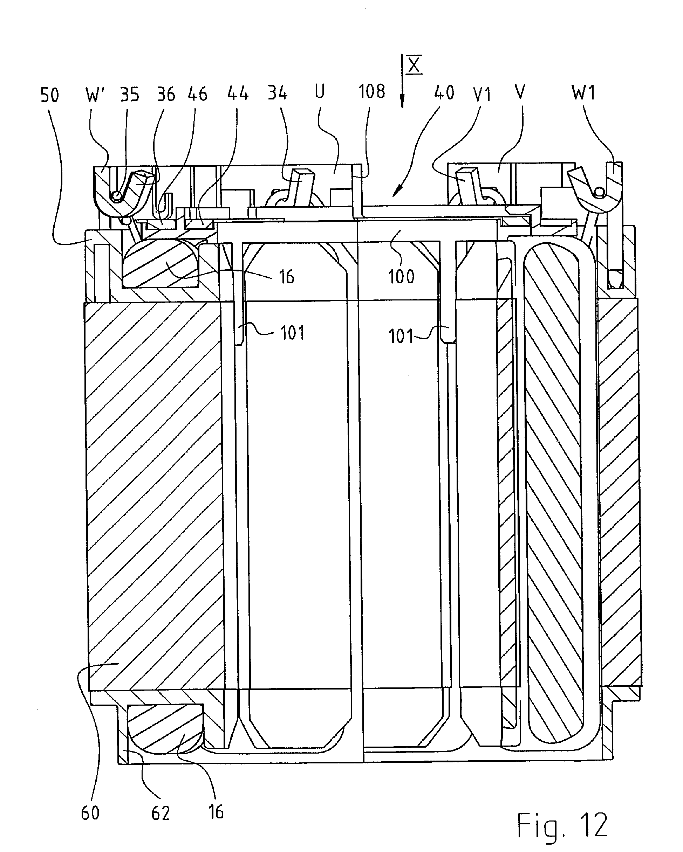

Die Fig. 1 bis 12 zeigen ein erstes Ausführungsbeispiel der Erfindung, nämlich einen Motor mit sechs ausgeprägten Statorpolen 11' bis 16', auf die sechs Spulen 11 bis 16 fortlaufend und gleichsinnig gewickelt sind. Die Nut zwischen den Polen 11' und 12' ist mit 21 bezeichnet, die Nut zwischen den Polen 12' und 13' mit 22, und so fortlaufend die Nuten 23 bis 26.

Diese fortlaufende Wicklung 30 ist für eine Dreieck-Doppelparallel-Schaltung 28 bestimmt, wie sie in Fig. 3 in der üblichen Weise dargestellt ist.

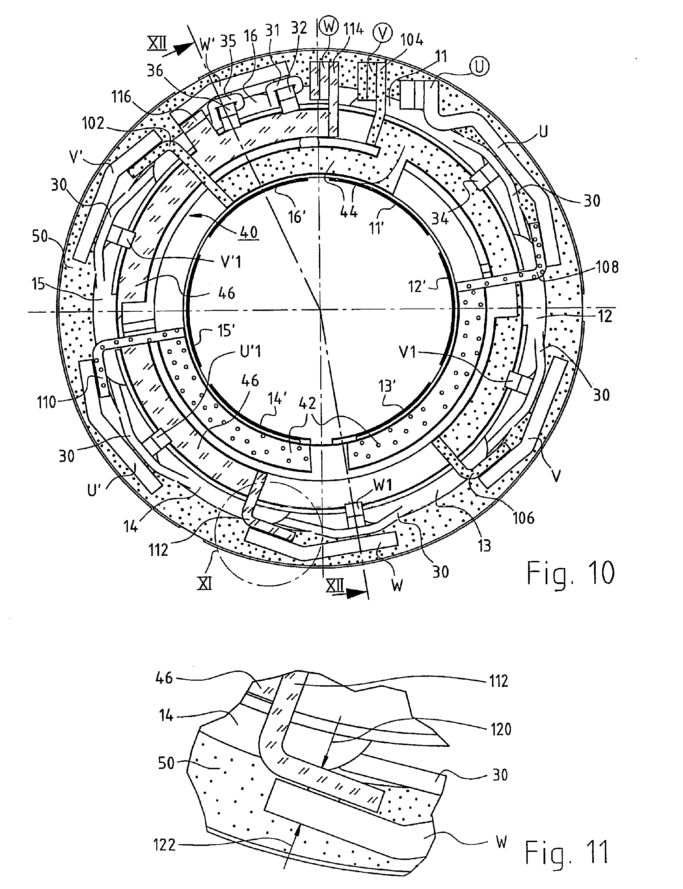

Gemäß Fig. 1 beginnt die fortlaufende Wicklung 30 an ihrem Anfang 31 am Haken 32 eines elektrischen Verbindungselements W', geht dann zur Spule 11, deren eine Hälfte in Fig. 1 rechts und deren andere Hälfte links dargestellt ist, geht weiter zu einem Haken 34 eines Verbindungselements U, das mit einem Anschlusselement 36 für den Anschluss der Phase U versehen ist, vgl. Fig. 10, geht dann weiter zu einer Spule 12 und von dieser zu einem Haken V1 eines Verbindungselements V und von dort weiter zur Spule 13.

Von der Spule 13 geht die fortlaufende Wicklung 30 zu einem Haken W1 eines Verbindungselements W, von dort zur Spule 14, und von dieser weiter zu einem Haken U'1 eines Verbindungselements U'.

Von dort geht die fortlaufende Wicklung 30 weiter zur Spule 15, und von dieser weiter zu einem Haken V'1 eines Verbindungselements V'.

Von dort geht die fortlaufende Wicklung 30 weiter zur Spule 16, und von dort geht ihr Ende 35 zu einem Haken 36 des Verbindungselements W', womit sich der Kreis schließt, da die Haken 32 und 36 über das Verbindungselement W' elektrisch miteinander verbunden sind.

Die in Fig. 1 dargestellte Anordnung ist nur ein Zwischenprodukt für die Herstellung der Dreieck-Doppelparallel-Schaltung 28 gemäß Fig. 3. Fig. 2 zeigt, wie die Schaltung über eine Verbindungsanordnung 40 vollends hergestellt wird. Die Verbindungsanordnung 40 hat eine Verbindung 42 zur elektrischen Verbindung der Verbindungselemente U und U' der Fig. 1, ebenso eine Verbindung 44 zur elektrischen Verbindung der Verbindungselemente V und V' der Fig. 1, und eine Verbindung 46 zur Verbindung der Verbindungselemente W und W' der Fig. 1. Ein bevorzugter Aufbau der Verbindungen 42, 44, 46 wird nachfolgend beschrieben.

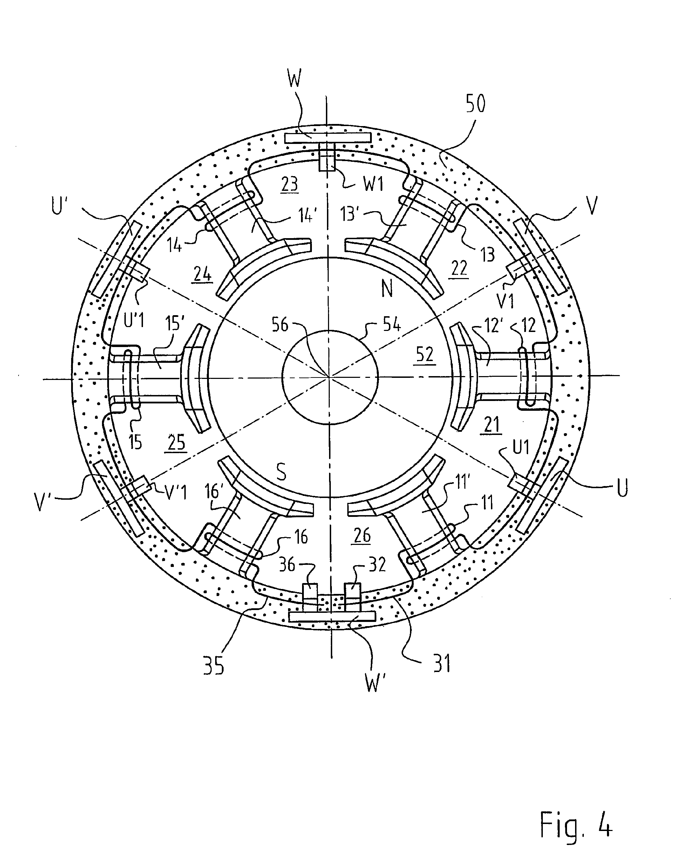

Die Verbindungselemente U, U', V, V', W und W' gemäß Fig. 1 sind an einem isolierenden Ring 50 befestigt, der in Fig. 4 grau hervorgehoben ist. Fig. 4 zeigt auch einen Rotor 52 und seine Welle 54 sowie die Drehachse 56, um die sich der Rotor 52 dreht. Dieser ist als zweipoliger Permanentmagnetrotor dargestellt, entsprechend einem Betrieb als Synchronmotor oder Drehstromgenerator, doch kann naturgemäß auch ein Rotor mit einer Kurzschlusswicklung verwendet werden, oder ein Wirbelstromrotor, um einen Betrieb als Asynchronmaschine zu ermöglichen.

Der Ring 50 liegt an einem Ende des Stators und konzentrisch zur Drehachse 56, so dass die Verbindungselemente U, U', V, V', W und W' etwa denselben Abstand von der Drehachse 56 haben.

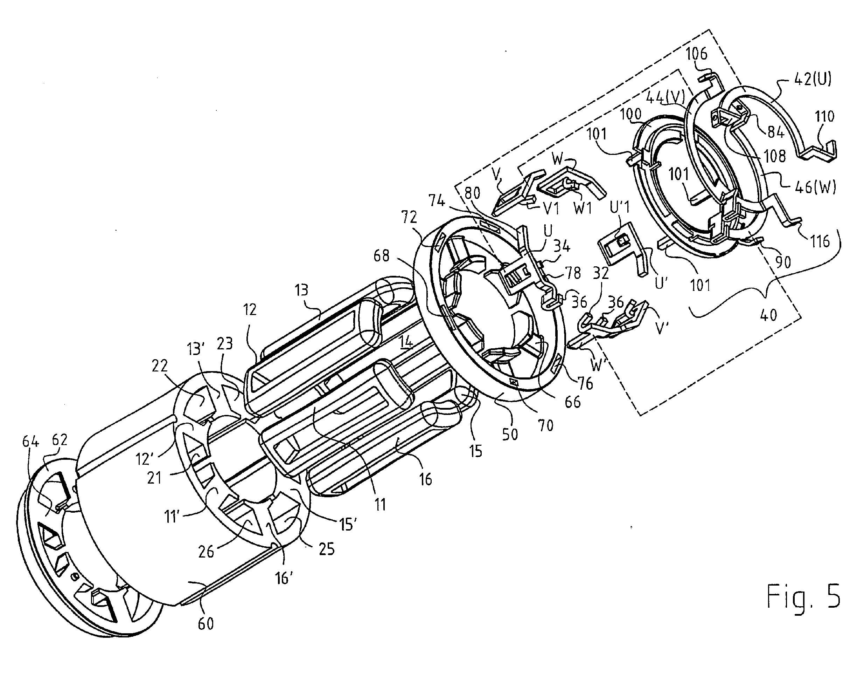

**Fig. 5** zeigt ein fertig packetiertes Statorblechpaket 60, dessen Blechschnitt bereits bei Fig. 4 beschrieben wurde. Dieses Blechpacket 60 wird mit den sechs Spulen 11 bis 16 bewickelt, die ebenfalls bei Fig. 4 bereits beschrieben wurden. Die Nuten des Blechpackets 60 sind in der üblichen Weise mit einem Isolator ausgekleidet. An dem in Fig. 5 linken Ende des Blechpakets 60 befindet sich ein ringförmiges isolierendes Formstück 62, das Teile 64 der Spulenkörper für die einzelnen Spulen bildet.

Am Ring 50 sind ebenfalls Teile 66 der Spulenkörper für die einzelnen Spulen bzw. Einzelwicklungen vorgesehen. Ferner ist der Ring 50 mit axialen Ausnehmungen dargestellt. In einer Ausnehmung 68 ist das elektrische Verbindungselement U befestigt, an dem sich der Haken 34 befindet. In einer Ausnehmung 70 ist das Verbindungselement W' befestigt, an dem sich die beiden Haken 32 und 36 befinden.

In einer Ausnehmung 72 ist das Verbindungselement V befestigt, an dem sich der Haken V1 befindet. In einer Ausnehmung 74 des Rings 50 ist das Verbindungselement W befestigt, an dem sich der Haken W1 befindet.

In einer Ausnehmung 76 ist das Verbindungselement V' befestigt, an dem sich der Haken V'1 befindet. Und schließlich ist in einer (nicht sichtbaren) Ausnehmung 78, welche der Ausnehmung 68 diametral gegenüber liegt, das Verbindungselement U' befestigt, an dem sich der Haken U'1 befindet.

Die Verbindungselemente U, V etc. werden bei der Herstellung des Rings 50 in diesem befestigt, z. B. durch Spritzguss.

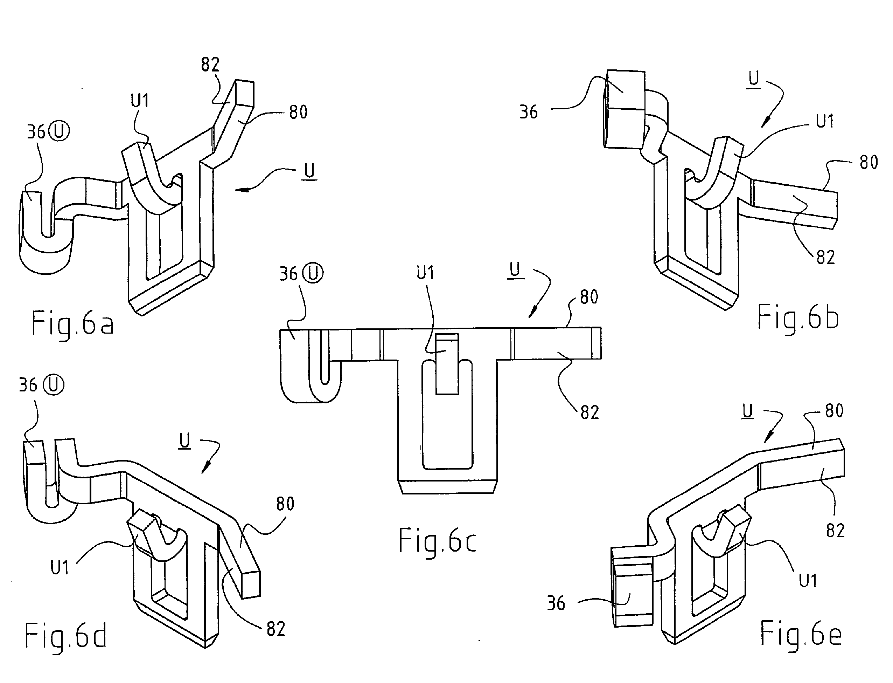

Die **Fig. 6 bis 8** zeigen die Verbindungselemente perspektivisch und aus verschiedenen Blickwinkeln. Diese haben jeweils einen seitlich abstehenden Arm, der in Fig. 6 mit 80 bezeichnet ist. Dieser hat eine Schweißfläche 82, an der eine zugeordnete Leiterbahn 84 durch Widerstandsschweißen befestigt wird, wie das Fig. 11 für das Verbindungselement W und eine Leiterbahn 112 zeigt.

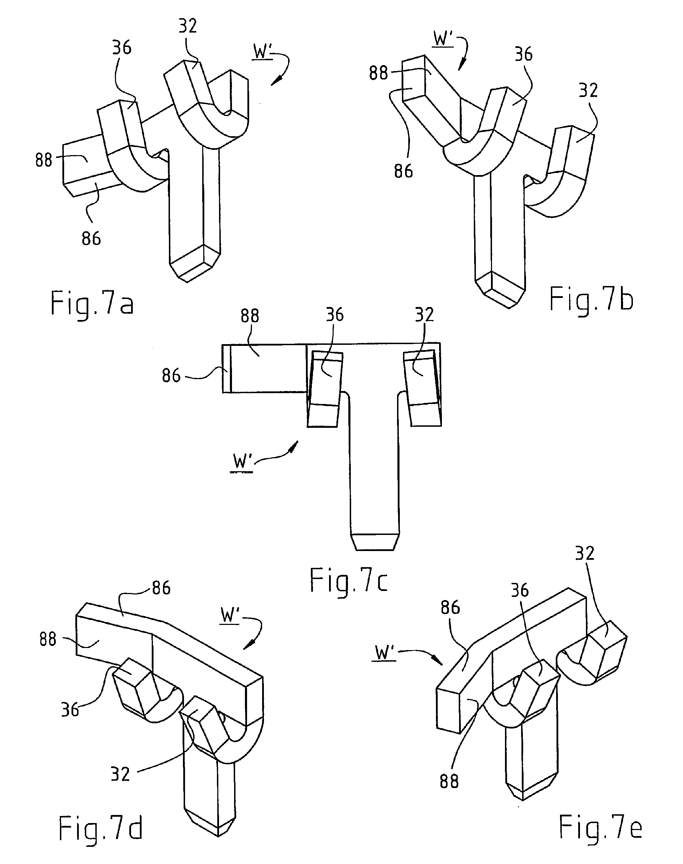

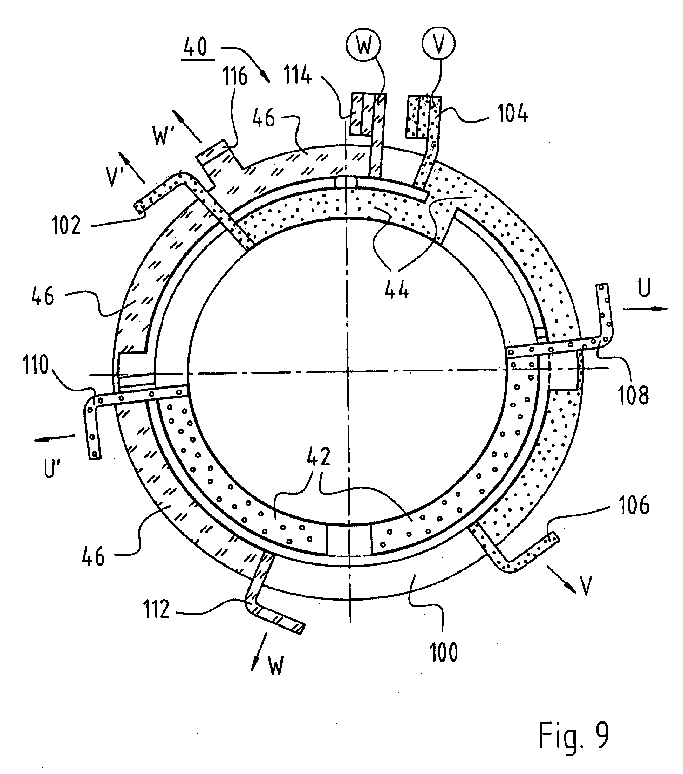

**Fig. 7** zeigt das Verbindungselement W' mit seinen beiden Haken 32 und 36, die jeweils etwa 20° abstehen. Das Element W' hat einen seitlich abstehenden Arm 86 mit einer Schweißfläche 88, an der gemäß Fig. 5 und 9 eine zugeordnete Leiterbahn 90 durch Widerstandsschweißen befestigt wird.

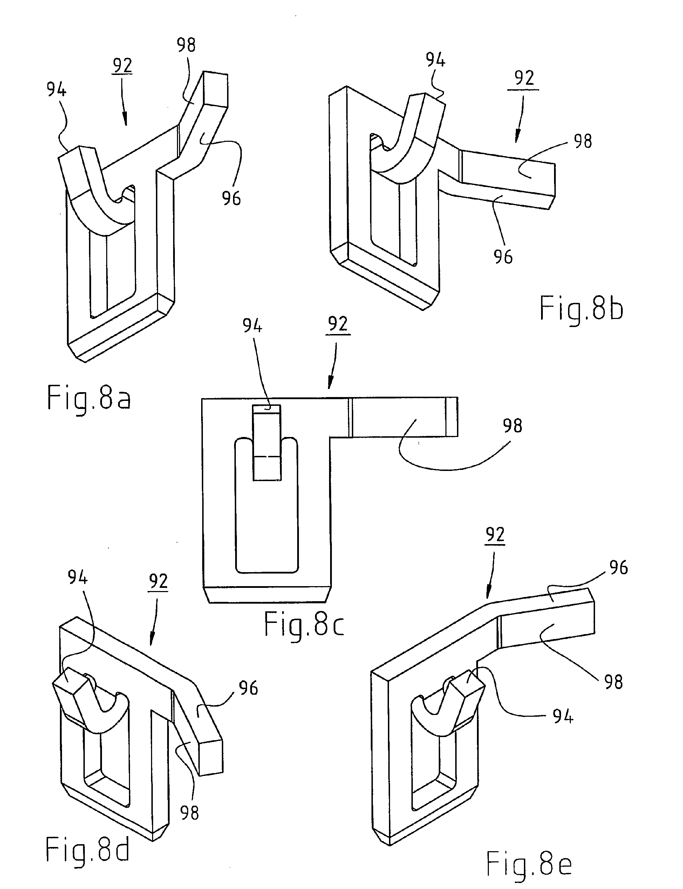

**Fig. 8** zeigt ein Verbindungselement 92, wie es für die Verbindungselemente V, W, U' und V' verwendet wird. Dieses hat einen Haken 94, der etwa 20° absteht, und einen seitlich abstehenden Arm 96, an dem sich eine Schweißfläche 98 befindet.

**Fig. 9** zeigt eine praktische Ausführung der in Fig. 2 nur schematisch dargestellten Verbindungsanordnung 40. Diese enthält die drei Leiterbahnen 42, 44, 46 in Form von flachen Leitern, welche vollständig in ein Teil 100 aus Kunststoff eingebettet sind. Aus Gründen der Anschaulichkeit ist das Teil 100, auch Verbindungsscheibe genannt, aufgeschnitten dargestellt. Wie Fig. 5 zeigt, hat es drei Füße 101, die dazu dienen, es in der richtigen Lage am Bleckpacket 60 zu fixieren. Die eigentliche Befestigung erfolgt durch das Anschweißen der Leiterbahnen.

Bezogen auf das Zifferblatt einer Uhr erstreckt sich die Leiterbahn 44 im Uhrzeigersinn etwa von der Stellung 11.00 Uhr bis zur Stellung 17.00 Uhr. In der Stellung 11.00 Uhr hat sie einen nach außen ragenden abgewinkelten Arm 102, der wie angedeutet zur Verbindung mit dem Verbindungselement V' der Fig. 1 dient.

In der Stellung 12.30 Uhr hat die Leiterbahn 44 ein nach außen ragendes Anschlusselement 104 für die Phase V des Motors. In der Stellung 17.00 Uhr hat sie einen nach außen ragenden abgewinkelten Arm 106, der zur Verbindung mit dem Verbindungselement V der Fig. 1 dient. - Wie man erkennt, verläuft die Leiterbahn 44 etwa von 11.00 bis 13.00 Uhr auf einer radial inneren Bahn und wechselt dann auf eine radial äußere Bahn, die etwa von 13.00 bis 17.00 Uhr verläuft. Der Vorteil hierbei ist, dass man zwar drei Leiterbahnen 44, 46 und 48 hat, aber diese in radialer Richtung nur zwei benachbarte Bahnen belegen.

Die Leiterbahn 42 erstreckt sich etwa von der Stellung 14.30 Uhr bis zur Stellung 20.30 Uhr. An der Stelle 14.30 Uhr hat sie einen radial nach außen ragenden Arm 108 zur Verbindung mit dem Verbindungselement U, und in der Stellung 20.30 Uhr einen Arm 110 zur Verbindung mit dem Verbindungselement U' der Fig. 1. Sie verbindet also die Elemente U und U'

Die Leiterbahn 46 erstreckt sich etwa von der Stellung 18.30 Uhr, wo sich ein nach außen ragender Arm 112 zur Verbindung mit dem Verbindungselement W befindet, bis zur Stellung 12.15 Uhr, wo sich ein Anschlusselement 114 für die Phase W befindet. Etwa an der Stelle 10.45 Uhr befindet sich ein nach außen ragender Kurzarm 116 zur Verbindung mit dem Verbindungselement W'.

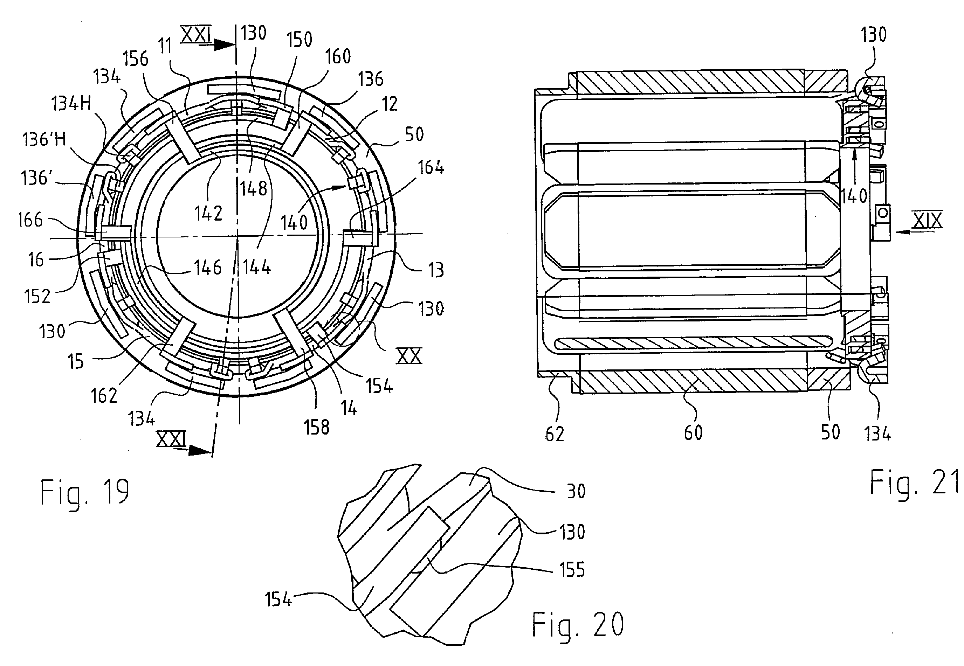

Wie bereits beschrieben, haben die Verbindungselemente, welche in den Fig. 6 bis 8 dargestellt sind, Schweißflächen 82, 88 und 98, und an diesen werden die Arme 102, 106, 108, 110, 112, und 116 - bevorzugt großflächig - mittels Widerstandsschweißung befestigt, um einen niedrigen Übergangswiderstand zu erhalten. Zweckmäßig wird hierbei eines der beiden Teile mit einer Schweißwarze versehen, wie das in Fig. 20 dargestellt ist, wo eine Schweißwarze 155 verwendet wird.

Diese Verbindungen sind in den Fig. 10, 11 und 12 dargestellt, welche das bewickelte Statorblechpacket 60 zeigen, an welchem die Verbindungsanordnung montiert ist. Fig. 11 zeigt eine Einzelheit, und durch Pfeile 120, 122 ist angedeutet, wie mittels einer Schweißzange der Arm 112 gegen das Verbindungselement W gepresst und mit diesem elektrisch verschweißt wird.

Die Abschnitte des Drahtes 30, welche in die Haken 34, V1, W1, U'1, V'1, 36 und 32 eingehängt wurden, werden in der Weise verschweißt, dass diese Haken mittels einer Schweißzange zusammen gebogen und gleichzeitig erhitzt werden. Dabei wird der Draht 30 ebenfalls erhitzt, so dass seine Isolation verdampft und er mit dem betreffenden Verbindungselement verschweißt wird.

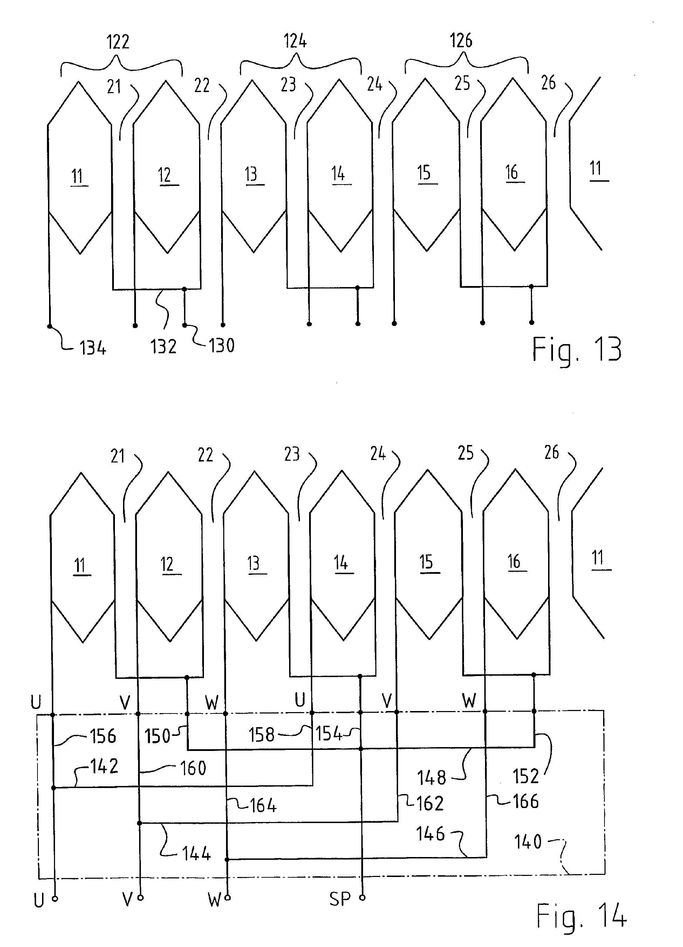

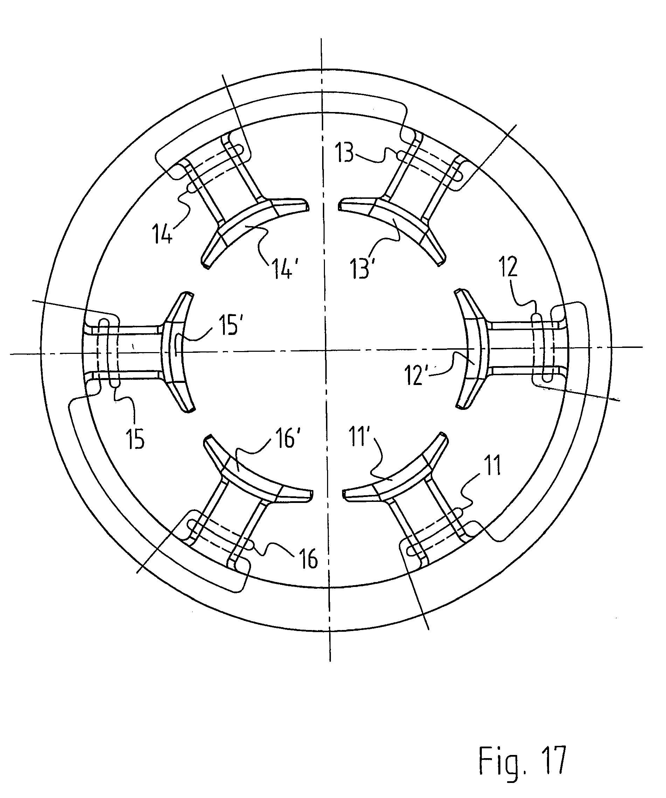

Die Fig. 13 bis 21 zeigen ein zweites Ausführungsbeispiel der Erfindung, hier eine Stern-Doppelparallel-Schaltung 120, wie sie in Fig. 15 dargestellt ist. Im Vergleich zur Dreiecksschaltung gemäß Fig. 3 ist hier noch ein Verbinder 148 für den Sternpunkt SP notwendig.

Gleiche oder gleich wirkende Teile wie in den Fig. 1 bis 12 werden in den Fig. 13 bis 21 mit denselben Bezugszeichen bezeichnet und gewöhnlich nicht nochmals beschrieben.

Wie **Fig. 13** zeigt, ist hier die gesamte Wicklungsanordnung in Zweiergruppen aufgeteilt. Die Spulen 11 und 12 bilden eine Wicklungsgruppe 122, die Spulen 13 und 14 eine Wicklungsgruppe 124, und die Spulen 15 und 16 eine Wicklungsgruppe 126.

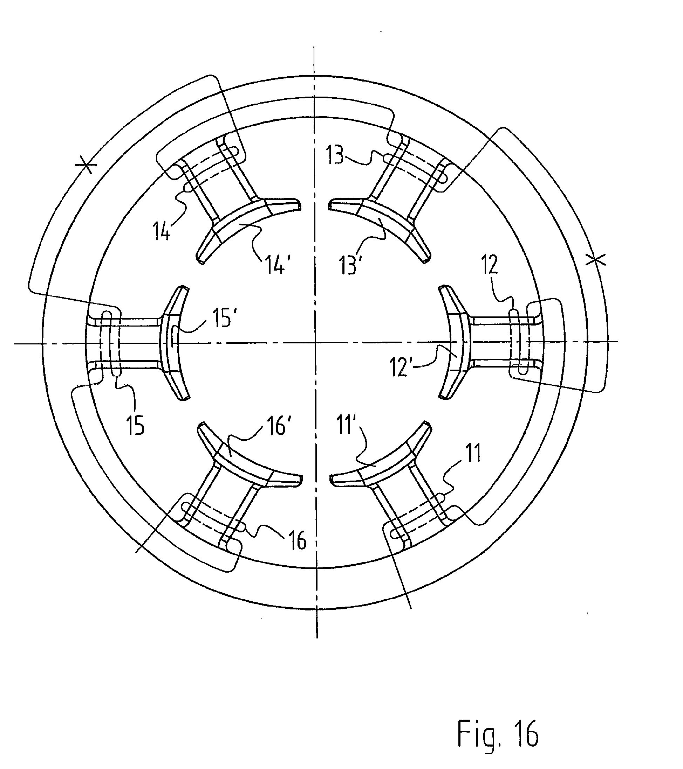

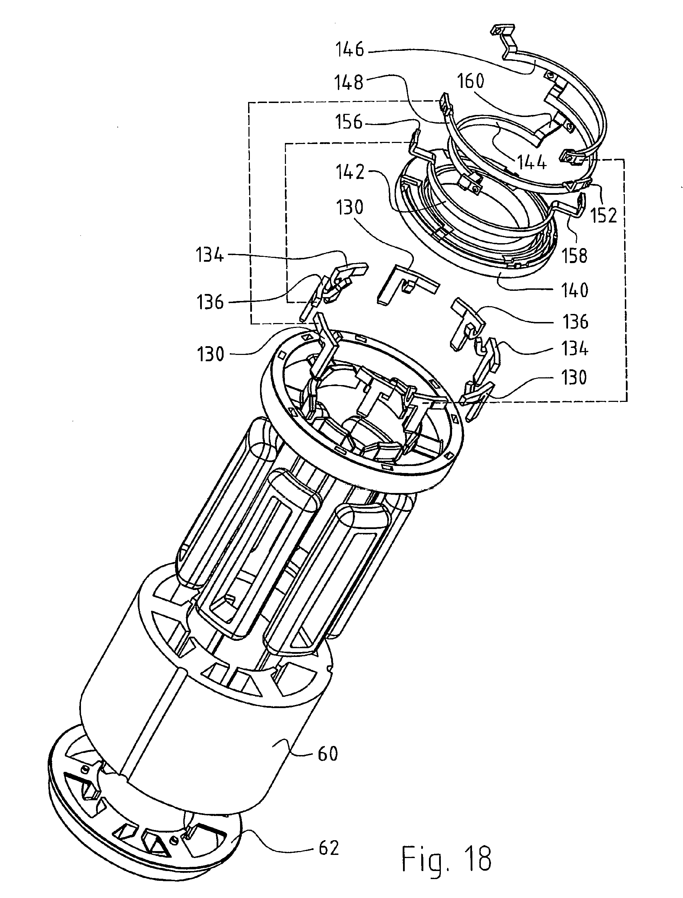

Wie **Fig. 16** zeigt, werden auch hier alle Einzelwicklungen 11 bis 16 gemeinsam gewickelt, doch haben die Spulen 11 und 12 einen entgegengesetzten Wicklungssinn, ebenso die Spulen 13 und 14, ebenso die Spulen 15 und 16. Auch hier werden die Verbindungen zwischen benachbarten Spulen beim Wickeln in Haken von Verbindungselementen eingehängt, wie das bei Fig. 1 ausführlich beschrieben wurde, nur dass hier die Verbindungselemente eine etwas andere Form haben, wie das aus Fig. 18 klar hervorgeht. Zwei Verbindungen werden in Fig. 16 an den Stellen X unterbrochen.Befestigungselemente

**Fig. 18** zeigt, dass drei Typen von Verbindungselementen verwendet werden, nämlich ein Typ 130, der z. B. bei der Spulengruppe 122 mit dem Leiter 132 verbunden ist, der die Spulen 11 und 12 miteinander verbindet. Die Verbindungselemente vom Typ 130 werden mit dem Sternpunktleiter 148 verbunden.

Ferner wird ein Typ 134 von Verbindungselement verwendet, der mit dem linken Ende einer Wicklungsgruppe verbunden wird, z. B. in Fig. 19 mit der Spule 11, und schließlich ein Typ 136, der jeweils mit dem rechten Ende einer Wicklungsgruppe verbunden wird, z. B. in Fig. 19 mit der Spule 12, oder, als Verbindungselement 136', mit der Spule 16.

Wie **Fig. 19** zeigt, wird der Wicklungsdraht 30 zwischen den Verbindungselementen 136' und 134 nach dem Wickeln unterbrochen, und die dadurch entstehenden Drahtenden werden jedes mit dem zugeordneten Haken 136'H bzw. 134H des zugeordneten Verbindungselements 136' bzw. 134 mechanisch durch Umbiegen verbunden.

Auf diese Weise ist eine einfache Verbindung mit den Verbindungselementen möglich.

**Fig. 14** zeigt die Verbindungsanordnung 140, welche insgesamt vier Leiterbahnen 142 (U), 144 (V), 146 (W) und 148 (SP) enthält, und diese Verbindungsanordnung hat gemäß Fig. 19 und 21 die Form eines Rings 140, in den diese vier Leiterbahnen als hochkant stehende Leiterbahnen eingebettet sind. Diese Leiterbahnen sind in der Praxis vom Kunststoff des Rings 140 vollständig umschlossen und dadurch isoliert.

Von der Leiterbahn 148 für den Sternpunkt gehen drei radiale Leiter 150, 152, 154 ab, die mit den entsprechenden Teilen der Wicklung verbunden sind, die sich aus Fig. 14 und Fig. 19 klar ergeben.

Von der Leiterbahn 142 (U) geht eine radiale Verbindung 156 zur Spule 11 und eine radiale Verbindung 158 zur Spule 14.

Von der Leiterbahn 144 (V) geht eine radiale Verbindung 160 zur Spule 12 und eine radiale Verbindung 162 zur Spule 15.

Von der Leiterbahn 146 (W) geht eine radiale Verbindung 164 zur Spule 13 und eine radiale Verbindung 166 zur Spule 16.

**Fig. 20** zeigt die Art der Schweißverbindung zwischen einem Verbindungselement, hier einem der Verbindungselemente 130 und einem radialen Verbinder 154 für den Leiter 148 (Sternpunkt). Diese Art der Verbindung ist für alle radialen Verbinder dieselbe. Der radiale Verbinder 154 hat an seiner radial äußeren Seite eine Schweißwarze 155, und beim Schweißvorgang wird durch die Backen der Schweißzange der Verbinder 154 gegen die entsprechende Fläche des Verbindungselements 130 gepresst und dadurch mit diesem verschweißt.

Die Art der elektrischen und mechanischen Verbindung ist also exakt dieselbe wie bei den Fig. 1 bis 12, wo das sehr ausführlich beschrieben wurde, so dass der Leser im Interesse der Kürze auf diese Beschreibungsteile verwiesen werden kann.

Naturgemäß sind im Rahmen der vorliegenden Erfindung vielfache Abwandlungen und Modifikationen möglich. Sehr vorteilhaft ist bei der Erfindung die weitgehend automatisierbare Fertigung und die Eignung für Motoren, die bei niedrigen Betriebsspannungen hohe Motorströme aufnehmen und folglich ein hohes Drehmoment erzeugen können. Die Motoranschlüsse können, wie in Fig. 9 dargestellt, teilweise an der Verbindungsanordnung 40 vorgesehen werden, so dass eine solche Verbindungsanordnung ein recht komplexes Teil darstellt, das eine Vielzahl von Funktionen übernehmen kann, und dessen Herstellung als Einzelteil und nachfolgendes Einfügen in den Motor wesentlich einfacher ist als die Verdrahtung eines Motors von Hand.

## Patentansprüche

1. Elektromotor mit einem um eine Drehachse (56) drehbaren Rotor (52) und einem um diesen Rotor (52) herum angeordneten Stator (60), der mit Polen (11' bis 16') versehen ist, auf denen jeweils eine Einzelwicklung (11 bis 16) angeordnet ist, welche Einzelwicklungen (11 bis 16) durchgehend gewickelt sind und zusammen eine Wicklungsanordnung (30) bilden, die zur Erzeugung eines Drehfelds ausgebildet ist,
ferner mit mindestens einer etwa konzentrisch zur Drehachse (56) angeordneten Anordnung mit voneinander isolierten elektrischen Verbindungselementen (U, V, W; U', V', W'; 130, 134, 136), welche mit Haken als Befestigungselement (34, V1, W1, U'1, V'1, 32, 36) versehen sind, die so angeordnet sind, dass ein Einlegen von Wicklungsdraht (30) in mindestens einen Teil dieser Haken (34, V1, W1, U'1, V'1, 32, 36) beim Wickelvorgang möglich ist, um ein zugeordnetes Ende einer Einzelwicklung elektrisch und mechanisch mit diesem Befestigungselement (34, V1, W1, U'1, V'1, 32, 36) zu verbinden
und mit Abschnitten des Wicklungsdrahts (30), welche zwei Einzelwicklungen (12 bis 16) miteinander verbinden, über einen zugeordneten Haken (U, V, W, U', V', W', 130, 134, 136) geführt, darin eingehängt, und mit diesem elektrisch und mechanisch verbunden sind,
wobei ein Verbindungselement (U, V, W, U', V', W'; 130, 134, 136) jeweils in einem Bereich neben einem solchen Haken (34, V1, W1, U'1, V'1, 32, 36) mit einer Verbindungsfläche (82, 88, 98) für eine Schweißverbindung (155) versehen ist,
ferner mit einer Verbindungsanordnung (40; 140), welche nach Art eines Ringes aus einem isolierenden Werkstoff ausgebildet ist, in welcher Leiterbahnen (42, 44, 46), voneinander isoliert, eingebettet sind, von welchen leitende Elemente (156, 158, 160, 162, 164, 166) in einer Richtung weg von diesem Ring (40; 140) und in Richtung weg von den Verbindungselementen (U, V, W, U', V', W'; 130, 134, 136) nach außen ragen, welche leitenden Elemente jeweils im Bereich ihres freien Endes abgebogen sind, wobei der abgebogene Teil (102, 106, 108, 110, 112, 116) jeweils im Wesentlichen parallel zu der für eine Schweißverbindung (155) vorgesehenen Verbindungsfläche (82, 88, 98) des zugeordneten Verbindungselements (U, V, W, U', V', W'; 130, 134, 136) verläuft und mit dieser zugeordneten Verbindungsfläche (82, 88, 98) verschweißt ist, um die abgebogenen Teile (102, 106, 108, 110, 112, 116) der leitenden Elemente (156, 158, 160, 162, 164, 166) in einer vorgegebenen Weise mit den zugeordneten Verbindungsflächen (82, 88, 98) der Verbindungselemente elektrisch und mechanisch zu verbinden.

2. Elektromotor nach Anspruch 1, bei welchem die Verbindungselemente (U, V, W, U', V', W'; 130, 134, 136) an einem isolierenden Formstück (40; 140) vorgesehen sind, welch letzteres am Stator (60) angeordnet ist.

3. Elektromotor nach Anspruch 2, bei welchem am Formstück (40) Teile (66) der Träger für die Einzelwicklungen (11 bis 16) des Stators vorgesehen sind.

4. Elektromotor nach einem der vorhergehenden Ansprüche, bei welchem im Bereich einer Schweißverbindung (155) mindestens ein Element aus den Teilmengen von zugehörigem Verbindungselement (U, V, W, U', V', W'; 130, 134, 136) und leitendem Element (156, 158, 160, 162, 164, 166) der Verbindungsanordnung (40; 140) mit einer Schweißwarze (155) versehen ist.

5. Elektromotor nach einem der vorhergehenden Ansprüche, bei welchem die leitenden Elemente (156, 158, 160, 162, 164, 166) an ihrem freien Ende jeweils mit einer Schweißwarze (155) versehen sind, um eine Widerstands-Schweißverbindung mit dem zugeordneten Abschnitt der betreffenden Verbindungselemente (U, V, W, U', V', W'; 130, 134, 136) zu erleichtern.

6. Elektromotor nach Anspruch 5, bei welchem die Leiterbahnen (42, 44, 46; 142, 144, 146, 148) an den Stellen, an welchen sie in den Ring (40; 140) eingebettet sind, von diesem isolierend umgeben sind.

7. Elektromotor nach einem der vorhergehenden Ansprüche, bei welchem an der Verbindungsanordnung (40) elektrische Anschlüsse (U, V, W) für den Motor vorgesehen sind.

## Claims

1. An electric motor having a rotor (52) which can be rotated about an axis of rotation (56) and a stator (60) which is arranged around this rotor (52) and is provided with poles (11' to 16') on which a respective individual winding (11 to 16) is arranged, which individual windings (11 to 16) are wound continuously and together form a winding arrangement (30) which is designed to generate a rotating field,
furthermore having at least one arrangement arranged concentrically to the axis of rotation (56) with mutually isolated electrical connecting elements (U, V, W; U', V', W'; 130, 134, 136) which are provided with hooks as a fastening element (34, V1, W1, U'1, V'1, 32, 36) which are arranged so that it is possible to insert winding wire (30) into at least some of these hooks (34, V1, W1, U'1, V'1, 32, 36) during the winding procedure in order to connect an associated end of an individual winding electrically and mechanically to this fastening element (34, V1, W1, U'1, V'1, 32, 36)
and having portions of the winding wire (30) which connect two individual windings (12 to 16) to one another, are guided by way of an associated hook (U, V, W, U', V', W', 130, 134, 136), suspended therein, and connected electrically and mechanically thereto,
wherein a connecting element (U, V, W, U', V', W'; 130, 134, 136) is provided in each case with a connecting surface (82, 88, 98) for a welded connection (155) in a region adjacent to such a hook (34, V1, W1, U'1, V'1, 32, 36),
furthermore having a connecting arrangement (40; 140) which is constructed in the manner of a ring from an insulating material in which conductor paths (42, 44, 46) are embedded, insulated from one another, from which conductive elements (156, 158, 160, 162, 164, 166) project outwards in a direction away from this ring (40; 140) and in a direction away from the connecting elements (U, V, W, U', V', W'; 130, 134, 136), which conductive elements are each bent in the region of their free end, wherein the bent part (102, 106, 108, 110, 112, 116) extends in each case substantially parallel to the connecting surface (82, 88, 98), provided for a welded connection (155), of the associated connecting element (U, V, W, U', V', W'; 130, 134, 136) and is welded to this associated connecting surface (82, 88, 98) in order to electrically and mechanically connect the bent parts (102, 106, 108, 110, 112, 116) of the conductive elements (156, 158, 160, 162, 164, 166) to the associated connecting surfaces (82, 88, 98) of the connecting elements in a predetermined manner.

2. An electric motor according to Claim 1, in which the connecting elements (U, V, W, U', V', W'; 130, 134, 136) are provided on an insulating moulded piece (40; 140), which latter is arranged on the stator (60).

3. An electric motor according to Claim 2, in which parts (66) of the supports for the individual windings (11 to 16) of the stator are provided on the moulded piece (40).

4. An electric motor according to one of the preceding claims, in which at least one element from the subgroups of the associated connecting element (U, V, W, U', V', W'; 130, 134, 136) and the conductive element (156, 158, 160, 162, 164, 166) of the connecting arrangement (40; 140) is provided with a welding nipple (155).

5. An electric motor according to one of the preceding claims, in which the conductive elements (156, 158, 160, 162, 164, 166) are provided in each case with a welding nipple (155) at their free end in order to facilitate a resistance welded connection to the associated portion of the respective connecting elements (U, V, W, U', V', W'; 130, 134, 136).

6. An electric motor according to Claim 5, in which the conductor paths (42, 44, 46; 142, 144, 146, 148) are surrounded in insulating manner by the ring (40; 140) at the points at which they are embedded therein.

7. An electric motor according to one of the preceding claims, in which electrical connections (U, V, W) for the motor are provided on the connecting arrangement (40).

## Revendications

1. Moteur électrique comprenant un rotor (52) apte à tourner autour d'un axe de rotation (56), et un stator (60) qui ceinture la périphérie de ce rotor (52) et est muni de pôles (11' à 16') sur lesquels un enroulement individuel (11 à 16) est respectivement disposé,
lesquels enroulements individuels (11 à 16) sont bobinés en continu et forment, associativement, un bloc (30) d'enroulements qui est conçu pour engendrer un champ tournant,
comprenant, en outre, au moins un ensemble agencé à peu près concentriquement à l'axe de rotation (56) et constitué d'éléments de connexion électrique (U, V, W ; U', V', W' ; 130, 134, 136) isolés les uns des autres et pourvus, en tant qu'élément de fixation, de cochets (34, V1, W1, U'1, V'1, 32, 36) disposés de manière à autoriser l'insertion d'un fil de bobinage (30) dans au moins une partie de ces crochets (34, V1, W1, U'1, V'1, 32, 36), au cours de l'opération de bobinage, en vue de relier électriquement et mécaniquement une extrémité associée d'un enroulement individuel à cet élément de fixation (34, V1, W1, U'1, V'1, 32, 36),
et des tronçons dudit fil de bobinage (30) qui relient l'un à l'autre deux enroulements individuels (12 à 16), sont guidés par l'intermédiaire d'un crochet (U, V, W, U', V', W', 130, 134, 136) associé, sont accrochés dans ce dernier, et sont reliés électriquement et mécaniquement à ce dernier,
un élément de connexion (U, V, W, U', V', W' ; 130, 134, 136) étant respectivement doté, dans une région jouxtant un tel crochet (34, V1, W1, U'1, V'1, 32, 36), d'une surface de jonction (82, 88, 98) dédiée à une connexion soudée (155),
comprenant, par ailleurs, un ensemble de liaison (40 ; 140) réalisé à la manière d'une bague en un matériau isolant et dans lequel sont noyées, avec isolation mutuelle, des pistes conductrices (42, 44, 46) à partir desquelles des éléments conducteurs (156, 158, 160, 162, 164, 166) dépassent, vers l'extérieur, dans une direction les éloignant de cette bague (40 ; 140) et dans une direction les éloignant des éléments de connexion (U, V, W, U', V', W' ; 130, 134, 136), lesquels éléments conducteurs sont respectivement coudés dans la région de leur extrémité libre, la partie coudée (102, 106, 108, 110, 112, 116) s'étendant, à chaque fois, pour l'essentiel parallèlement à la surface de jonction (82, 88, 98) de l'élément de connexion (U, V, W, U', V', W' ; 130, 134, 136) associé, prévue pour une connexion soudée (155), et étant soudée à cette surface de jonction (82, 88, 98) associée, en vue de relier électriquement et mécaniquement les parties coudées (102, 106, 108, 110, 112, 116) desdits éléments conducteurs (156, 158, 160, 162, 164, 166), d'une manière préétablie, aux surfaces de jonction associées (82, 88, 98) desdits éléments de connexion.

2. Moteur électrique selon la revendication 1, dans lequel les éléments de connexion (U, V, W, U', V', W' ; 130, 134, 136) sont prévus sur une pièce moulée isolante (40 ; 140), laquelle est disposée sur le stator (60).

3. Moteur électrique selon la revendication 2, dans lequel des parties (66) des supports, dédiés aux enroulements individuels (11 à 16) du stator, sont prévues sur la pièce moulée (40).

4. Moteur électrique selon l'une des revendications précédentes, dans lequel au moins un élément, constitué par des parties d'un élément de connexion associé (U, V, W, U', V', W' ; 130, 134, 136) et d'un élément conducteur associé (156, 158, 160, 162, 164, 166) de l'ensemble de liaison (40 ; 140), est pourvu d'une protubérance de soudage (155) dans la région d'une connexion soudée (155).

5. Moteur électrique selon l'une des revendications précédentes, dans lequel les éléments conducteurs (156, 158, 160, 162, 164, 166) sont respectivement munis d'une protubérance de soudage (155), à leur extrémité libre, en vue de faciliter une liaison de soudage par résistance avec le segment associé des éléments de connexion (U, V, W, U', V', W' ; 130, 134, 136) concernés.

6. Moteur électrique selon la revendication 5, dans lequel, aux emplacements auxquels elles sont noyées dans la bague (40 ; 140), les pistes conductrices (42, 44, 46 ; 142, 144, 146, 148) sont entourées par cette dernière avec effet d'isolation.

7. Moteur électrique selon l'une des revendications précédentes, dans lequel des connexions électriques (U, V, W), dévolues audit moteur, sont prévues sur l'ensemble de liaison (40).
